(19) Europäisches Patentamt
European Patent Office
Office européen des brevets

(11) Veröffentlichungsnummer : **0 058 871**
**B1**

(12) # EUROPÄISCHE PATENTSCHRIFT

(45) Veröffentlichungstag der Patentschrift : **05.10.83**

(51) Int. Cl.³ : **E 21 B 43/22**

(21) Anmeldenummer : **82100912.3**

(22) Anmeldetag : **09.02.82**

(54) **Verfahren zur Gewinnung von Öl aus einer unterirdischen Lagerstätte.**

(30) Priorität : **18.02.81 DE 3105912**

(43) Veröffentlichungstag der Anmeldung : **01.09.82 Patentblatt 82/35**

(45) Bekanntmachung des Hinweises auf die Patenterteilung : **05.10.83 Patentblatt 83/40**

(84) Benannte Vertragsstaaten : **AT FR GB NL**

(56) Entgegenhaltungen :
**DE A 2 418 444**

**TENSIDE DETERGENTS, Band 16, 1979 Carl Hanser Verlag MÜNCHEN (DE) D. BALZER u.a. : « Die Phasen-Inversions-Temperatur als Auswahlkriterium für Tenside bei der tertiären Erdölgewinnung »**

**TENSIDE DETERGENTS, Band 14, 1977 Carl Hanser Verlag MÜNCHEN (DE) H. STACHE u.a. : « Carboxymethylierte Oxäthylate als Tenside für die tertiäre Erdölgewinnung »**

**TENSIDE DETERGENTS, Band 17, 1980 Carl Hanser Verlag MÜNCHEN (DE) M. AKSTINAT : « Tenside und Polymere — Wirkstoffe für die tertiäre Erdölgewinnung in hochsalinaren Systemen»**

(73) Patentinhaber : **CHEMISCHE WERKE HÜLS AG - RSP Patente / PB 15 - Postfach 13 20 D-4370 Marl 1 (DE)**

(72) Erfinder : **Balzer, Dieter, Dr.
Griesheimer Strasse 18
D-4370 Marl (DE)**

**EP 0 058 871 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Verfahren zur Gewinnung von Öl aus einer unterirdischen Lagerstätte

Bei der Gewinnung von Öl aus ölführenden Lagerstätten gelingt es im allgemeinen nur, einen Bruchteil des ursprünglich vorhandenen Öls durch primäre Gewinnungsverfahren zu fördern. Hierbei gelangt das Öl infolge des natürlichen Lagerstättendrucks an die Erdoberfläche. Bei der sekundären Ölgewinnung wird Wasser in eine oder mehrere Injektionsbohrungen der Formation eingepreßt und das Öl zu einer oder mehreren Produktionsbohrungen getrieben und sodann an die Erdoberfläche gebracht. Dieses sogenannte Wasserfluten als Sekundärmaßnahme ist relativ billig und wird entsprechend häufig eingesetzt, führt jedoch in vielen Fällen nur zu einer geringen Mehrentölung der Lagerstätte.

Eine wirksame Verdrängung des Öls, die teurer, jedoch im Hinblick auf die gegenwärtige Ölverknappung volkswirtschaftlich dringend erforderlich ist, gelingt durch tertiäre Maßnahmen. Darunter sind Verfahren zu verstehen, bei denen entweder die Viskosität des Öls erniedrigt und/oder die Viskosität des nachflutenden Wassers erhöht und/oder die Grenzflächenspannung zwischen Wasser und Öl erniedrigt werden.

Die meisten dieser Prozesse lassen sich entweder als Lösungs- oder Mischungsfluten, thermische Ölgewinnungsverfahren, Tensid- oder Polymerfluten bzw. als Kombination von mehreren der genannten Verfahren einordnen.

Thermische Gewinnungsverfahren beinhalten die Injizierung von Dampf oder heißem Wasser bzw. sie erfolgen als *In situ*-Verbrennung. Lösungs- oder Mischungsverfahren bestehen im Injizieren eines Lösungsmittels für das Erdöl in die Lagerstätte, wobei dies ein Gas und/oder eine Flüssigkeit sein kann.

Tensidflutprozesse — je nach Tensidkonzentration, gegebenenfalls Tensidtyp und Zusätzen unterscheidet man tensidgestütztes Wasserfluten, übliches Tensidfluten (Lowtension flooding), micellares Fluten und Emulsionsfluten — beruhen in erster Linie auf einer starken Erniedrigung der Grenzflächenspannung zwischen Öl und Flutwasser. In einigen Fällen jedoch, insbesondere in Gegenwart höherer Tensidkonzentrationen, entstehen Wasser-in-Öl-Dispersionen mit, verglichen zum Öl, deutlich erhöhter Viskosität, so daß hier das Tensidfluten auch auf eine Verkleinerung des Mobilitätsverhältnisses zielt, wodurch der Wirkungsgrad der Ölverdrängung erhöht wird. Reines Polymerfluten beruht überwiegend auf dem zuletzt beschriebenen Effekt des günstigeren Mobilitätsverhältnisses zwischen Öl und nachflutendem Wasser.

Die vorliegende Erfindung bezieht sich auf ein Verfahren zur Gewinnung von Öl durch Tensidfluten. Als ölmobilisierende Tenside wurden bislang vor allem organische Sulfonate, wie Alkyl-, Alkylaryl- oder Petroleumsulfonate, beschrieben. Diese besitzen jedoch eine sehr niedrige Toleranzgrenze gegenüber der Salinität der Lagerstättenwässer. Bereits Salzkonzentrationen von 1 000 ppm gelten als problematisch, wobei die Empfindlichkeit dieser Tenside gegenüber Erdalkaliionen besonders ausgeprägt ist. Hier wird als obere kritische Grenzkonzentration ca. 500 ppm angenommen (US-A 4 110 228). In Gegenwart höherer Salzkonzentrationen bilden sich bei Einsatz dieser Tenside Fällungsprodukte, die zu Verstopfungen der Formation führen können. Da jedoch viele Lagerstättenwässer wesentlich höhere Salinitäten besitzen, z. B. in Norddeutschland bis zu 250 000 ppm, hat man nach Wegen gesucht, die sonst gut ölmobilisierenden Eigenschaften der organischen Sulfonate auch für höher salinare Lagerstättensysteme nutzbar zu machen. Im Gemisch mit Cosurfactants, wie Alkoholen oder nichtionischen Tensiden, zeigten sich organische Sulfonate auch weniger elektrolytempfindlich. Allerdings handelt man sich mit einem solchen Vorgehen ein sehr kompliziertes Gemisch ein, dessen Basiskomponente, Petroleumsulfonat, ja bereits selbst ein Vielstoffgemisch ist. Berücksichtigt man die Tatsache, daß unterschiedliche Tensidmoleküle mit der Gesteinsoberfläche unterschiedlich adsorptiv in Wechselwirkung treten, so ist sicher anzunehmen, daß sich die Zusammensetzung des Tensidgemisches beim Transport durch die Formation dauernd ändern wird, womit gleichzeitig die sorgfältige Anpassung der Tensidkombination an die Lagerstätteneigenschaften sowohl hinsichtlich Ölmobilisierung als auch Verträglichkeit mit dem Lagerstätteninhalt eingebüßt werden kann.

Im Gegensatz zu dieser Substanzgruppe zeigen carboximethylierte Alkyl- bzw. Alkylaryloxethylate eine gute Verträglichkeit selbst mit extrem hohen Salinitäten (z. B. 250 000 ppm) der Lagerstättenwässer. Erdalkaliionen bis zu Konzentrationen von etwa 20 000 ppm besitzen keinen nachteiligen Einfluß. Da die ölmobilisierende Wirkung dieser Tenside gut (D. Balzer und K. Kosswig, Tenside Detergents 16, 256 (1979) sowie ihre Herstellung einfach und wirtschaftlich ist, sind diese Substanzklassen für den Einsatz bei der Ölverdrängung in mittel- und hochsalinaren Lagerstättensystemen (10 000 bis 250 000 ppm Gesamtsalzgehalt) sehr geeignet.

Bei zahlreichen Untersuchungen zur Restölmobilisierung von Modellformationen mit carboximethylierten Oxethylaten als Tensiden wurde jedoch beobachtet, daß der Transport der Ölbank durch die Formation von einem starken Druckanstieg begleitet wird. So wurden selbst bei relativ hochpermeablem künstlichen Formationen Druckgradienten bis zu etwa 40 bar/m beobachtet, die bei Übertragung in das Feld zu Drucken weit oberhalb des petrostatischen Drucks führen und damit den Einsatz dieser Tenside bei der tertiären Erdölgewinnung ausschließen würden. Auf Druckgradienten von ähnlicher Größenordnung wird auch in der Literatur hingewiesen (C. Marx, H. Murtada, M. Burkowsky, Erdoel Erdgas Zeitschrift 93, 303 (1977). Die Autoren erklären die hohen Druckdifferenzen mit der Bildung von Emulsionszonen, die sich jedoch auf den Bereich der Flutfront beschränken sollen. Bei unseren

Versuchen war allerdings eine lokale Begrenzung des Druckgradienten nicht zu erkennen. Und da Rohölemulsionen, stabilisiert durch carboximethylierte Oxethylate, strukturviskos sind, lassen sich die hohen Druckdifferenzen auch durch eine Herabsetzung der Flutgeschwindigkeit nicht beliebig absenken. Folgich wäre beim Tensidfluten mit carboximethylierten Oxethylaten im Feldversuch mit unbeherrschbar hohen Druckgradienten zu rechnen.

Es bestand daher die Aufgabe, für die gut ölmobilisierenden carboximethylierten Oxethylate eine Vorgehensweise des Tensidflutens zu finden, die nicht zu hohen Druckgradienten führt. Eine Erniedrigung des Druckgradienten ist dadurch möglich, daß durch geeignete Anpassung der Tensidmenge an die Lagerstätte ein stark verzögerter Tensiddurchbruch angestrebt wird. Allerdings setzt diese Verfahrensweise homogene Formationen voraus, wie sie zwar bei künstlichen Sandschüttungen, kaum jedoch bei eigentlichen Lagerstätten gegeben sind. Eine Lösung der Aufgabe wird daher auf diese Weise kaum möglich sein.

Diese Aufgabe wurde gelöst durch die Verwendung der carboximethylierten Alkyl- bzw. Alkylaryloxethylate mit einem Carboximethylierungsgrad zwischen 10 und 90 % als Tenside sowie durch eine Vorgehensweise, bei der das Tensid dergestalt für die Lagerstätte ausgewählt wird, daß die Phasen-Inversions-Temperatur (PIT) des Systems Originalrohöl, Lagerstättenwasser, Tensid und gegebenenfalls Zusätze 0 bis 10 °C oberhalb der Lagerstättentemperatur liegt (Nicht veröffentlichte Patentanmeldung).

Überraschenderweise wurde nun gefunden, daß das Tensidfluten bei Verwendung von carboximethylierten Oxethylaten mit einem Carboximethylierungsgrad von 90 bis 100 % erheblich verbesserte Entölungsergebnisse liefert. Die verbesserten Ergebnisse bestehen darin, daß die für die Entölung einzusetzende Tensidmenge wesentlich geringer sein kann als bei Produkten mit einem Carboximethylierungsgrad von 60 bis 80 %, erkennbar auch an einer deutlich geringeren Retention der Tensidmoleküle. Der erfindungsgemäße Einsatz der Tenside mit einem Carboximethylierungsgrad von 90 bis 100 % ist daher wirtschaftlich von erheblichem Vorteil.

Besonders vorteilhaft ist der hohe Umsatzgrad für die molekulare Einheitlichkeit, so daß hier die Wahrscheinlichkeit für ein chromatographisches Auftrennen der Tensidmischung in ihre Komponenten und damit eine unkontrollierte Änderung der Phasenverhältnisse beim Transport des Tensidslugs von der Injektions- zur Produktionssonde äußerst gering wird.

Um hohe Druckgradienten zu vermeiden, wird das Tensid an die Lagerstättenverhältnisse angepaßt. Kriterium dieser Anpassung ist die Phasen-Inversions-Temperatur (PIT) der lagerstättenspezifischen Emulsion bestehend aus dem Rohöl, dem Formationswasser, dem Tensid und gegebenenfalls Zusätzen, wobei die PIT 0 bis 10 °C, vorzugsweise 1 bis 5 °C, oberhalb der Lagerstättentemperatur liegen soll.

Die PIT's werden mit Hilfe der Messung der elektrischen Leitfähigkeit bestimmt. Hierzu wird eine Emulsion bestehend aus dem Rohöl (gegebenenfalls Lebendöl) und dem Formationswasser der betreffenden Lagerstätte (Phasenverhältnis 1 : 1) und dem Tensid (2 bzw. 5 %, bezogen auf die wäßrige Phase) sowie gegebenenfalls Zusätzen hergestellt. Die elektrische Leitfähigkeit der Emulsion wird sodann in Abhängigkeit von der Temperatur gemessen. Bei Erreichen der PIT schlägt eine o/w-Emulsion in eine w/o-Emulsion um bzw. umgekehrt, wobei die elektrische Leitfähigkeit sprungartig sinkt bzw. steigt. Genau genommen ist dies ein Temperaturbereich von wenigen Grad C. Registriert als PIT wird die Temperatur, bei der die elektrische Leitfähigkeit den Mittelwert zwischen oberem (o/w) und unterem (w/o) Niveau erreicht.

Die vorliegende Erfindung bezieht sich auf den Einsatz von carboximethylierten Oxethylaten mit einem Carboximethylierungsgrad von 90 bis 100 % als ölmobilisierende Tenside. Man kann diese Verbindungen nach DE-A 24 18 444 durch Umsetzung von Oxethylaten der Formel $R{-}(O{-}CH_2{-}CH_2)_nOH$ mit überschüssiger Chloressigsäure und Alkalihydroxid bzw. Erdalkalihydroxid herstellen. R bedeutet hierbei einen gesättigten oder ungesättigten, geradkettigen oder verzweigten Alkylrest mit 6 bis 20, vorzugsweise 8 bis 18 C-Atomen, oder einen Alkylarylrest mit 3 bis 16 C-Atomen, vorzugsweise 6 bis 14 C-Atomen im Alkylrest. n kann Werte von 1 bis 30, vorzugsweise von 1 bis 20, annehmen. Das Kation kann Natrium, Kalium, Lithium, Ammonium Calcium oder Magnesium sein. Als Alkohole, deren Oxethylate den Carboximethylaten zugrunde liegen, lassen sich z. B. einsetzen : Hexylalkohol, Octylalkohol, Nonylalkohol, Decyl-, Undecyl-, Lauryl-, Tridecyl-, Myristil-, Palmityl- und Stearylalkohol, aber auch ungesättigte Alkohole, wie z. B. Oleylalkohol. Die Alkylkette kann dabei normal- oder verzweigtkettig sein. Besonders zweckmäßig werden handelsübliche Gemische dieser Alkohole herangezogen, vorzugsweise mit Kettenlängen, die sich um nicht mehr als 4 C-Zahlen unterscheiden. Als Alkylphenole lassen sich z. B. einsetzen : Butylphenol, Hexylphenol, Octylphenol, Nonylphenol, Decylphenol, Undecylphenol, Dodecylphenol, Tridecylphenol, Tetradecylphenol. Geeignet sind auch Phenole mit mehreren Alkylgruppen, wie z. B. Dialkylphenole. Die Alkylkette kann normal- oder verzweigtkettig sein. Insbesondere lassen sich handelsübliche Gemische solcher Alkylphenole einsetzen, vorzugsweise mit Kettenlängen, die sich um nicht mehr als 4 C-Zahlen unterscheiden.

Die Oxethylierung kann in Gegenwart katalytischer Mengen Alkalihydroxid mit 1 bis 30, vorzugsweise 1 bis 20 Mol Ethylenoxid pro Mol Hydroxyl-Verbindung durchgeführt werden. Die entstehenden Gemische haben annähernd eine Poisson-Verteilung der Homologen. Entsprechend ihrer Herstellung enthalten die carboximethylierten Oxethylate gewöhnlich noch gewisse Mengen nicht umgesetztes Oxethylat, die jedoch erfindungsgemäß gering sein sollen. Mit der Formel $R{-}(OCH_2{-}CH_2)_n{-}OCH_2{-}COOM$ ist daher meist ein Gemisch mit unterschiedlichen Mengen an nicht

umgesetztem Oxethylat gemeint. Demgemäß läßt sich ein Carboximethylierungsgrad definieren. Besonders wirksam sind Mischungen mit Carboximethylierungsgraden von 90 bis 100 %, vorzugsweise mit einem Carboximethylierungsgrad > 95 %. Die Angabe % bedeutet hier stets Gewichtsprozent.

Die beschriebenen Mischungen aus anionischem und teilweise nichtionischem Tensid, carboximethylierte Oxethylate genannt, sind in üblichen Lagerstättenwässern löslich oder zumindest gut dispergierbar, wobei keinerlei Ausfällung beobachtet wird.

Bei der Auswahl des Tensids mit der Maßgabe, daß die Phasen-Inversions-Temperatur des Systems Rohöl/Formationswasser/Tensid 0 bis 10 °C oberhalb der Lagerstättentemperatur liegen soll, geht man folgendermaßen vor : Bei Kenntnis der Lagerstättentemperatur bzw. gegebenenfalls eines Temperaturbereiches wird aus dem Rohöl, dem Formationswasser und gegebenenfalls dem Gas der Lagerstätte und einem geeignet scheinenden carboximethylierten Oxethylat der o. a. Formel orientierend die PIT gemessen. Diese Messung ist gegebenenfalls mit weiteren Tensiden dieser Klasse und gegebenenfalls Zusätzen zu wiederholen.

Auf der Basis der Meßergebnisse erfolgt das Maßschneidern des carboximethylierten Oxethylats, dessen ölmobilisierende Wirksamkeit für das betreffende Lagerstättensystem durch einen oder mehrere Vorversuche in einer Sandschüttung als Modellformation oder an Originalbohrkernen selbst verifiziert werden kann.

Die Natriumsalze der carboximethylierten Oxethylate, die durch Umsetzung von Oxethylaten mit Chloressigsäure bei Gegenwart von Natronlauge hergestellt werden, bieten mehrere Ansatzpunkte für die « Molekulararchitektur » mit dem Ziel, in einem bestimmten System eine gewünschte Phasen-Inversions-Temperatur einzustellen :

$$R\text{—}(OCH_2CH_2)_n\text{—}OH + ClCH_2COOH \xrightarrow[-NaCl\text{—}H_2O]{+\ 2NaOH}$$

$$R\text{—}(OCH_2CH_2)_n\text{—}CH_2COONa.$$

| R | n | Umsatz |
|---|---|---|
| variabel | variabel | (begrenzt variabel) |

Die Salze der carboximethylierten Oxethylate setzen sich prinzipiell aus drei variablen Bausteinen zusammen : dem hydrophoben Rest R, der Oxethylatkette und der Carboximethylgruppe, deren Anteil in dem erhaltenen Produktgemisch durch Steuerung des Umsatzes des Ausgangsoxethylates mit Chloressigsäure zwar in weiten Grenzen verändert werden kann. Wie zuvor jedoch erörtert, soll der Carboximethylierungsgrad möglichst 95 bis 100 % betragen. Als eigentliche Variablen kommen daher nur der hydrophobe Rest R und der Oxethylierungsgrad infrage.

Einen Eindruck von dem Einfluß des Alkylrestes auf die Phasen-Inversions-Temperatur in einem bestimmten System vermittelt die Tabelle 1 :

Tabelle 1

Abhängigkeit der PIT von der Länge des Alkylrestes bei den Natriumsalzen carboximethylierter Fettalkoholoxethylate mit 4,4 EO und bei einem Carboximethylierungsgrad (CM) von 65 % ; Rohöl A (siehe D. Balzer und K. Kosswig, loc. cit.), Formationswasser A (siehe D. Balzer und K. Kosswig, loc. cit.), Phasenverhältnis 1 : 1,2 % Tensid.

| C-Zahl im Alkylrest | PIT (°C) |
|---|---|
| 12 | 74 |
| 13*) | 53 |
| 14 | 41 |
| 16 | 37 |

*) 1 : 1 Mischung aus $C_{12}$ und $C_{14}$.

Die Abhängigkeit der Phasen-Inversions-Temperatur von Rohölemulsionen (wie Tabelle 1) vom Oxethylierungsgrad (EO) bei carboximethylierten Nonylphenoloxethylaten (CM ca. 98 %) im EO-Gradbereich zwischen etwa 5 und 6,5 ist linear, der Koeffizient mit ca. + 30 °C/EO-Grad ist außerordentlich stark ausgeprägt. Dagegen ist der Einfluß des Carboximethylierungsgrades (CM) mit nur ca. + 0,5 °C/% CM relativ gering. Mit diesen Abhängigkeiten wird demonstriert, welche Variabilität die Klasse der carboximethylierten Oxethylate bezüglich der Anpassung an eine Lagerstätte bietet.

Das Volumen des zu injizierenden Tensidslugs, sein Tensidgehalt und eventuelle Zusätze sowie

ferner die Art und Größe der die Mobilität kontrollierenden Polymerlösung können anhand von Modellflutversuchen optimiert werden.

Aufgrund dieser Vorversuche wird das Tensid gelöst oder dispergiert in Formationswasser mit Hilfe von Injektionspumpen in die Lagerstätte eingebracht. Es hat sich gezeigt, daß die carboximethylierten Oxethylate auch in Gegenwart sehr hoher Salinität sehr gute Emulgatoren für Rohöl und andere Kohlenwasserstoffe sind, so daß das Tensid auch als übertägig hergestellte Emulsion in die Lagerstätte eingebracht werden kann. Die Tensidlösung bzw. die Emulsion kann entweder kontinuierlich oder in Form eines Slugs, d. h. eines eng begrenzten Volumens von 0,02 bis 2 PV (= Vielfaches des Porenvolumens der Lagerstätte) eingepreßt werden. Die Größe des Tensidslugs richtet sich vor allem nach der Tensidkonzentration und nach der Wirtschaftlichkeit. Die Tensidkonzentration beträgt 0,2 bis 30 %, vorzugsweise 1 bis 20 %.

Zweckmäßigerweise geht dem Tensidfluten ein Wasserfluten voraus, wobei als Flutflüssigkeit das produzierte Formationswasser eingesetzt wird. Die Größe dieser Wasserslugs beträgt 0,01 bis 4 PV, vorzugsweise 0,05 bis 1,0 PV. Dem Tensidslug nachgeschaltet kann man sowohl aus Gründen der Mobilitätskontrolle als auch zum Schutz der Tensidlösung vor eindringendem Formationswasser einen Polymerslug in die Lagerstätte injizieren. Hierzu wird ein Polymer oder Polymergemisch in einer solchen Konzentration in dem Formationswasser gelöst, daß die Viskosität 2- bis 6 mal so hoch ist wie die des Öls. Bei Lagerstätten mittlerer oder höherer Salinität (3 bis 28 % Gesamtsalzgehalt) kommen hier insbesondere Biopolymere, wie Polysaccharide oder Cellulosederivate, die in Gegenwart der erhöhten Salzkonzentration noch eine ausreichende Viskosität besitzen und keine Fällungen zeigen, infrage.

Bei Formationswässern, die relativ arm an Erdalkaliionen sind, kann es sich als zweckmäßig erweisen, der Tensidlösung sowie dem vor- und nachgefluteten Formationswasser lösliche Erdalkalisalze, wie z. B. $CaCl_2$, $MgCl_2$, $Ca(NO_3)_2$ oder $Mg(NO_3)_2$ zuzusetzen. Bei der Anpassung des Tensids an die Lagerstätte, d. h. also bei der Messung der PIT, müssen diese Zusätze berücksichtigt werden. Zweckmäßigerweise schließt sich an das Injizieren der Polymerlösung normales Wasserfluten an. Dieses wird solange fortgesetzt, wie sich wirtschaftlich Öl gewinnen läßt.

Die nachfolgenden Beispiele sollen das erfindungsgemäße Verfahren erläutern :

## Beispiel 1

Zur Herstellung der künstlichen Formation wurde ein thermostatisierbares Hochdruckrohr von 70 cm Länge und 5 cm Durchmesser, versehen mit Temperaturmeßeinrichtung und Manometer, beidseitig verschließbar durch Gewindeverschlüsse mit Kapillareingang und Druckhalteventilausgang mit kantengerundetem Quarzsand beschickt. Sodann wurde die Sandschüttung mittels einer Hochdruckdosierpumpe mit Formationswasser A gesättigt und durch einen Thermostaten die gewünschte Temperatur eingestellt. Mit Hilfe eines Drucktransmitters wurde die Permeabilität der Sandschüttung bestimmt. Sodann erfolgte die Sättigung mit Rohöl A, wobei gleichzeitig der Haftwassergehalt gemessen wurde. Nunmehr setzte das Wasserfluten mit einer Flutgeschwindigkeit von ca. 2,5 m/d ein. Nach Einfluten von ca. 1,5 PV Formationswasser (1 PV 750 ml), wobei ein Verwässerungsgrad von 98 bis 100 % erzielt wurde, wurde das Tensid als Slug injiziert. Es folgten als Slug die Polymerlösung (0,4 PV) und ca. 3,0 PV Formationswasser. Tensid-, Polymer- und das anschließende Nachfluten mit Formationswasser erfolgten mit einer Flutgeschwindigkeit von ca. 1 m/Tag. Die Formationstemperatur betrug 49 °C, ihr Druck 60 bar, die Porosität der künstlichen Formation ca. 45 %, ihre Permeabilität ca. 1 200 mD und ihr Haftwassergehalt ca. 26 %.

Das Formationswasser A enthielt ca. 20 % NaCl, 0,1 % KCl, 1,2 % $CaCl_2$ und 0,4 % $MgCl_2$. Als Polymer diente Hydroxiethylcellulose (0,25 %, gelöst in Formationswasser, Viskosität bei 25 °C ca. 60 mPa.s). Als Rohöl A wurde ein paraffinbasisches Öl mit $n_D^{20} = 1{,}486$, $d_{20} = 0{,}863\ g/cm^3$ und $\eta_{20} = 19$ mPa.s verwendet.

Als Tensidlösung wurden 0,15 PV einer 6,6 %igen Dispersion von carboximethyliertem Nonylphenoloxethylat mit 5,4 Molen Ethylenoxid/Mol (6,5 g) in Formationswasser eingesetzt. Der Carboximethylierungsgrad betrug ca. 98 %, die PIT der betreffenden Rohölemulsion 52 °C. Durch das Wasserfluten wurde eine Entölung von 75 % erreicht, die sich nach weiteren 1,2 PV nach Beginn des Tensidflutens um 25 % auf 100 % Gesamtentölung steigern ließen. Hierbei ging die Verwässerung auf ca. 50 % zurück. Während des Transportes der durch das Tensid erzeugten Ölbank wurde ein mittlerer Druckgradient von 0,5 bar/m Ölbank gemessen. In der Sandpackung (ca. 2,4 kg) wurden relativ homogen verteilt 3,3 g Tensid analytisch nachgewiesen.

## Beispiel 2 (Vergleichsbeispiel)

Eine Formation wie in Beispiel 1 wurde hergestellt, mit Formationswasser A benetzt und mit Rohöl A gesättigt (Porosität 48 %, Permeabilität 1 200 mD, Haftwassergehalt 24 %, Temperatur 53 °C). Das Wasserfluten erbrachte eine Entölung von maximal 77 %. Durch Einfluten von 0,2 PV Tensidlösung (10,3 g carboximethyliertes Nonylphenoloxethylat mit ca. 6 Molen Ethylenoxid/Mol, Carboximethylierungsgrad CM ca. 75 %, dispergiert in Formationswasser A, PIT der Rohölemulsion 56 °C) nachgeschalteter Polymerlösung und Formationswasser A wie in Beispiel 1, ließ sich die Entölung nach weiteren 1,4 PV

nach Beginn des Tensidflutens um 20 % auf 97 % steigern. Während des Transportes der durch das Tensid erzeugten Ölbank in der Formation wurde ein mittlerer Druckgradient von 0,7 bar/m bei einer Flutgeschwindigkeit von 1,2 m/Tag gemessen. Nach dem Flutversuch wurde in der künstlichen Formation eine Tensidmenge von 8,5 g festgestellt. Dies sit eine deutlich höhere retendierte Menge als z. B. in den erfindungsgemäßen Beispielen 1 und 3.

Beispiel 3

In eine Formation wie in Beispiel 1 (Formationswasser A, Rohöl A, Porosität 45 %, Permeabilität 1 100 mD, Haftwasser 28 %, Temperatur 57 °C) wurde nach dem Wasserfluten, das eine Entölung von 74 % bewirkte, 0,2 PV Tensidlösung (10,3 g carboximethyliertes Nonylphenoloxethylat mit ca. 5,8 Molen Ethylenoxid/Mol, Carboximethylierungsgrad CM 97 %, dispergiert in Formationswasser A, PIT 61 °C) injiziert, wodurch nach weiteren 1,3 PV nach Beginn des Tensidflutens eine Gesamtentölung von 99 % erzielt wird. Nach dem Flutversuch wurde im Porenraum eine Tensidmenge von 4,5 g analytisch nachgewiesen. Dies ist eine deutlich geringere retendierte Tensidmenge als sie bei vergleichbaren Versuchen mit carboximethylierten Oxethylaten mit einem Carboximethylierungsgrad von 60 bis 80 % beobachtet wurde, womit auch hier die Überlegenheit der praktisch rein anionischen Produkte aufgezeigt wird.

Beispiel 4

Eine enger gepackte künstliche Formation wurde analog zu Beispiel 1 hergestellt, mit Formationswasser B benetzt und mit Rohöl B gesättigt (Porosität 39 %, Permeabilität 120 mD, 26 % Haftwassergehalt, Temperatur 41 °C). Nach dem Wasserfluten, das zu einer Entölung von 72 % führte, wurden 0,13 PV Tensidlösung (5,6 g carboximethyliertes Nonylphenoloxethylat mit ca. 5 Molen Ethylenoxid/Mol, Carboximethylierungsgrad CM 97 %, PIT der Rohölemulsion B 43 °C), dispergiert in Formationswasser B injiziert, dem wie in den Beispielen zuvor 0,4 PV Polymerlösung und ca. 3 PV Formationswasser folgten. Die Flutgeschwindigkeit hierbei betrug 0,6 m/Tag. Durch das Tensid wurden nach ca. 1,6 PV nach Beginn des Tensidflutens eine Gesamtentölung von 97 % erzielt. Es wurde ein mittlerer Druckgradient von ca. 5,5 bar/m während des Transportes der Ölbank durch die Formation beobachtet. Dieser relativ hohe Wert ist in erster Linie auf die niedrige Permeabilität der Formation zurückzuführen.

Nach dem Flutversuch wurde im Porenraum ein Tensidgehalt von 3,4 g analytisch nachgewiesen.

Formationswasser B enthält ca. 10 % NaCl, 2,2 % $CaCl_2$, 0,5 % $MgCl_2$ und geringe Mengen an KCl und $SrCl_2$. Rohöl B ist paraffinbasisch, $n_D^{20} = 1,480$, Dichte $\delta_{20} = 0,86$, Viskosität $\eta_{20} = 9$ mPa.s.

Beispiel 5

Eine Formation ähnlich Beispiel 1 (Porosität 44 %, Permeabilität 740 mD) wurde mit Formationswasser A benetzt und Rohöl A gesättigt (Haftwassergehalt 25 %, Versuchstemperatur 54 °C). Durch Wasserfluten wurde eine Entölung von 71 % erzielt. Durch Injizieren von 0,17 PV Tensidlösung (8,3 g carboximethyliertes Alfol-1214-oxethylat mit 4,5 Molen Ethylenoxid/Mol, CM 94 %, dispergiert in Formationswasser A, PIT 56 °C), nachgeschalteter Polymerlösung und Formationswasser A wie in Beispiel 1, ließ sich die Entölung nach weiteren 1,3 PV um 21 % auf 93 % steigern. Während des Ölbanktransportes in der Formation wurde ein mittlerer Druckgradient von 1,6 bar/m bei einer Flutgeschwindigkeit von 1,5 m/Tag gemessen. Nach dem Flutversuch wurden in der Sandpackung 4,6 g Tensid analytisch festgestellt.

Beispiel 6

In eine Formation ähnlich Beispiel 1 (Porosität 43 %, Permeabilität 560 mD) benetzt mit Formationswasser A, gesättigt mit Rohöl A (Haftwasser 23 %), Temperatur 61 °C wurde nach dem Wasserfluten, das eine Entölung von 70 % erbrachte (Verwässerung 95 bis 100 %) 0,2 PV Tensidlösung (9,4 g carboximethyliertes Alfol-16-oxethylat mit 7 Molen Ethylenoxid/Mol, CM 91 %, PIT der Rohölemulsion 65 °C) injiziert, der 0,4 PV Polymerlösung und ca. 3 PV Formationswasser A folgten. Nach 1,1 PV nach Beginn der Tensidinjektion wurden weitere 17 % Öl produziert, wobei die Verwässerung auf ca. 60 % zurückging. Während des Ölbanktransportes in der Formation wurde ein mittlerer Druckgradient von ca. 1 bar/m bei einer Flutgeschwindigkeit von 1,2 m/Tag gemessen. Die Analytik des Porenraums ergab einen Tensidgehalt von 4,0 g.

Die Förderung des Tertiäröls erfolgte bei allen Beispielen weitgehend emulsionsfrei, da der Tensiddurchbruch erst nach dem Ausfluten der Ölbank eintrat.

**Ansprüche**

1. Verfahren zur Gewinnung von weitgehend emulsionsfreiem Öl aus einer unterirdischen Lagerstätte mittlerer oder hoher Salinität durch Einpressen einer 0,1 bis 20 %igen Lösung oder Dispersion in Formationswasser von carboximethylierten Oxethylaten der Formel

$$R—(OCH_2CH_2)_n—OCH_2—COOM, \quad (I)$$

in der R einen linearen oder verzweigten aliphatischen Rest mit 6 bis 20 Kohlenstoffatomen oder einen alkylaromatischen Rest mit 3 bis 16 Kohlenstoffatomen in der Alkylgruppe, n 1 bis 30 und M ein Alkali- oder Erdalkali-Metallion oder Ammonium bedeutet und der Carboximethylierungsgrad unvollständig ist, in eine Injektionsbohrung, wobei das Tensid I so ausgewählt wird, daß die Phasen-Inversions-Temperatur des Systems Rohöl/Formationswasser/Tensid gegebenenfalls Zusätze 0 bis 10 °C oberhalb der Lagerstättentemperatur liegt, dadurch gekennzeichnet, daß der Carboximethylierungsgrad des Tensids, d. h. der anionische Anteil, bezogen auf den Gesamtanteil, 90 bis 100 % beträgt.

2. Verfahren nach Anspruch 1, dadurch gekennzeichnet, daß die Phasen-Inversions-Temperatur des Systems Rohöl/Formationswasser/Tensid/gegebenenfalls Zusätze 1 bis 5 °C oberhalb der Lagerstättentemperatur liegt.

3. Verfahren nach den Ansprüchen 1 und 2, dadurch gekennzeichnet, daß als Zusätze zur Tensidlösung in Formationswasser lösliche Erdalkalisalze verwendet werden können.

4. Verfahren nach den Ansprüchen 1 bis 3, dadurch gekennzeichnet, daß 0,02 bis 2 Porenvolumen Tensidlösung oder -dispersion eingepreßt werden.

5. Verfahren nach den Ansprüchen 1 bis 4, dadurch gekennzeichnet, daß vor der Injektion des Tensidslugs 0,05 bis 4 Porenvolumen Formationswasser in die Lagerstätte eingepreßt werden.

6. Verfahren nach den Ansprüchen 1 bis 5, dadurch gekennzeichnet, daß nach dem Injizieren des Tensidslugs 0,05 bis 4 Porenvolumen Formationswasser in die Lagerstätte eingepreßt werden.

7. Verfahren nach Anspruch 6, dadurch gekennzeichnet, daß die wäßrige Lösung ein viskositätserhöhendes Polymer enthalten kann.

8. Verfahren nach den Ansprüchen 1 bis 7, dadurch gekennzeichnet, daß der Carboximethylierungsgrad des Tensids 95 bis 100 % beträgt.

**Claims**

1. A process for the recovery of largely emulsion-free oil from an underground deposit of medium or high salinity by forcing into an injection bore a 0.1 to 20 % solution or dispersion in formation water of a carboxymethylated oxyethylate surfactant of the formula

$$R—(OCH_2CH_2)_n—OCH_2—COOM \quad (I)$$

where R is a linear or branched aliphatic radical of 6 to 20 carbon atoms or an alkylaromatic radical of 3 to 16 carbon atoms in the alkyl moiety, n is 1 to 30 and M is an alkali metal, alkaline earth metal or ammonium ion and the degree of carboxymethylation is incomplete, the surfactant I being selected so that the phase inversion temperature of the crude oil/formation water/surfactant/optional additives system is 0 to 10 °C above the temperature of the deposit, characterised in that the degree of carboxymethylation of the surfactant, i.e. the anionic fraction, is 90 to 100 % of the total.

2. A process according to claim 1, characterised in that the phase inversion temperature of the crude oil/formation water/surfactant/optional additives system is 1 to 5 °C above the temperature of the deposit.

3. A process according to claim 1 or 2, characterised in that a soluble alkaline earth metal salt is used as additive for the solution of the surfactant in the formation water.

4. A process according to any of claims 1 to 3, characterised in that 0.02 to 2 pore volumes of the surfactant solution or dispersion are forced in.

5. A process according to any of claims 1 to 4, characterised in that 0.05 to 4 pore volumes of formation water are forced into the deposit before the introduction of the surfactant slug.

6. A process according to any of claims 1 to 5, characterised in that 0.05 to 4 pore volumes of formation water are forced into the deposit after the introduction of the surfactant slug.

7. A process according to claim 6, characterised in that the aqueous solution contains a viscosity-enhancing polymer.

8. A process according to any of claims 1 to 7, characterised in that the degree of carboxymethylation of the surfactant is 95 to 100 %.

**Revendications**

1. Procédé pour extraire du pétrole largement exempt d'émulsion d'un gisement souterrain de salinité moyenne ou élevée, par injection, dans un puits d'injection, d'une solution ou dispersion à 0,1 à

20 % dans de l'eau de formation, de produits d'oxéthylation carboxyméthylés de la formule

$$R—(OCH_2CH_2)_n—OCH_2—COOM \quad (I)$$

dans laquelle R représente un radical aliphatique linéaire ou ramifié comportant de 6 à 20 atomes de carbone ou un radical alkyl-aromatique comportant de 3 à 16 atomes de carbone dans le groupe alkyle, n a une valeur de 1 à 30 et M représente un ion de métal alcalin ou alcalino-terreux ou un ion ammonium et le degré de carboxyméthylation est incomplet, le surfactif I étant choisi de façon telle que la température d'inversion de phases du système pétrole brut/eau de formation/surfactif, plus éventuellement des additifs, se situe de zéro à 10 °C au-dessus de la température du gisement, caractérisé par le fait que le degré de carboxyméthylation du surfactif, c'est-à-dire la proportion anionique, relativement à la proportion totale, est de 90 à 100 %.

2. Procédé selon la revendication 1, caractérisé par le fait que la température d'inversion de phases du système pétrole brut/eau de formation/surfactif, plus éventuellement des additifs, se situe de 1 à 5 °C au-dessus de la température du gisement.

3. Procédé selon les revendications 1 et 2, caractérisé par le fait que l'on peut utiliser, comme additifs à la solution de surfactif, des sels alcalino-terreux solubles dans l'eau de formation.

4. Procédé selon les revendications 1 à 3, caractérisé par le fait que l'on injecte de 0,02 à 2 volumes de pores de solution ou dispersion de surfactif.

5. Procédé selon les revendications 1 à 4, caractérisé par le fait qu'avant l'injection de la solution ou dispersion de surfactif, on injecte de 0,05 à 4 volumes de pores d'eau de formation dans le gisement.

6. Procédé selon les revendications 1 à 5, caractérisé par le fait qu'après l'injection de la solution ou dispersion de surfactif, on injecte de 0,05 à 4 volumes de pores d'eau de formation dans le gisement.

7. Procédé selon la revendication 6, caractérisé par le fait que la solution aqueuse peut contenir un polymère élevant la viscosité.

8. Procédé selon les revendications 1 à 7, caractérisé par le fait que le degré de carboxyméthylation du surfactif est de 95 à 100 %.